# FASCICULE DE BREVET EUROPEEN

(11) **EP 1 990 893 B1**
(45) Date de publication et mention de la délivrance du brevet: **03.03.2010**
(21) Numéro de dépôt: 08354020.3
(22) Date de dépôt: 14.03.2008
(51) Int. Cl.: H02J 9/06, H02M 5/458

(54) **Alimentation sans interruption et procédé de mise en oeuvre de ladite alimentation**
Unterbrechungsfreie Stromversorgung und Verfahren zur Umsetzung einer solchen Stromversorgung
Uninterruptible power supply and method of implementing said supply

(30) Priorité: 11.05.2007 FR 0703373
(43) Date de publication de la demande: 12.11.2008
(73) Titulaire: MGE UPS Systems, 38334 Saint-Ismier Cedex (FR)
(72) Inventeur: Chambon, Patrick, 38050 Grenoble Cedex 09 (FR)
(74) Mandataire: Tripodi, Paul

(56) Documents cités:
- US-A1- 2003 184 160
- US-A1- 2005 201 127
- US-B1- 6 201 371

## Description

### DOMAINE TECHNIOUE DE L'INVENTION

L'invention concerne une alimentation sans interruption comportant :
- au moins une première entrée destinée à être connectée à une première source d'une tension alternative,
- une sortie d'alimentation destinée à être connectée à une charge électrique,
- un premier convertisseur de la tension alternative sur la première entrée en une tension continue,
- un second convertisseur réversible de la tension continue en une tension alternative sur la sortie d'alimentation,
- un circuit de dérivation et/ou de sélection équipé de moyens interrupteurs pour, lors d'un fonctionnement en mode économique, coupler directement une entrée à la sortie d'alimentation, et
- des moyens de commande comportant un ensemble d'unités utilisées lors d'un fonctionnement en mode normal lors duquel l'entrée est découplée de la sortie d'alimentation par l'ouverture des moyens interrupteurs du circuit de dérivation et/ou de sélection.

L'invention concerne également un procédé d'alimentation électrique sans interruption comportant :
- l'application d'une première tension alternative sur au moins une première entrée,
- la fourniture d'une alimentation électrique sans interruption sur une sortie d'alimentation,
- une première conversion de la première tension alternative en une tension continue,
- une seconde conversion de la tension continue en une tension d'alimentation alternative, dans un sens ou dans l'autre sens,
- lors d'un fonctionnement en mode économique, le couplage direct d'une entrée à la sortie d'alimentation, et
- la commande de ladite alimentation électrique sans interruption par un ensemble de fonctions de régulation utilisées lors d'un fonctionnement en mode normal lors duquel ledit couplage direct est interrompu.

### ETAT DE LA TECHNIOUE

Le brevet américain US 6,295,215 décrit une alimentation sans interruption comportant une entrée destinée à être connectée à une source de tension alternative et une sortie d'alimentation destinée à être connectée à une charge électrique. Cette alimentation sans interruption comporte des moyens de conversion d'une tension alternative sur l'entrée en une tension continue, des moyens de conversion de la tension continue en une tension alternative sur la sortie, et un circuit de dérivation et/ou de sélection équipé de moyens interrupteurs pour coupler l'entrée à la sortie d'alimentation. Cette alimentation sans interruption comporte, en outre, des moyens de commande équipés d'au moins deux unités, l'une dédiée à un mode de fonctionnement normal et l'autre dédiée à un mode de fonctionnement économique.

Dans le mode de fonctionnement économique, l'entrée est couplée à la sortie d'alimentation par l'intermédiaire des moyens interrupteurs du circuit de dérivation et/ou de sélection. Dans le mode de fonctionnement économique, l'unité dédiée au mode de fonctionnement économique est mise en oeuvre, de sorte que les moyens de conversion de la tension continue en tension alternative fournissent des courants réactifs et harmoniques pour maintenir le facteur de puissance et d'autres paramètres de qualité de la puissance à un niveau désiré.

Les moyens de commandes des alimentations sans interruption de l'art antérieur ne sont pas optimisés et requièrent en grand nombre de composants et/ou d'étapes fonctionnelles. En particulier, le fonctionnement des alimentations sans interruption de l'art antérieur, dans un mode économique, nécessite la mise en oeuvre de modules de régulation supplémentaires.

### EXPOSE DE L'INVENTION

L'invention vise à remédier aux inconvénients des alimentations sans interruption de l'art antérieur en proposant une alimentation sans interruption comportant :
- au moins une première entrée destinée à être connectée à une première source d'une tension alternative,
- une sortie d'alimentation destinée à être connectée à une charge électrique,
- un premier convertisseur de la tension alternative sur la première entrée en une tension continue,
- un second convertisseur réversible de la tension continue en une tension alternative sur la sortie d'alimentation,
- un circuit de dérivation et/ou de sélection équipé de moyens interrupteurs pour, lors d'un fonctionnement en mode économique, coupler directement une entrée à la sortie d'alimentation, et
- des moyens de commande comportant un ensemble d'unités utilisées lors d'un fonctionnement en mode normal lors duquel l'entrée est découplée de la sortie d'alimentation par l'ouverture des moyens interrupteurs du circuit de dérivation et/ou de sélection.

L'alimentation sans interruption selon l'invention est caractérisée en ce que, lors du fonctionnement en mode économique, le premier convertisseur est arrêté, en ce que l'ensemble d'unités comporte une première unité de régulation de tension équipée d'une sortie pour fournir un premier courant de référence et une seconde unité de régulation de courant du second convertisseur équipée d'une entrée de courant de référence, et en ce que les moyens de commande comportent des moyens de commutation conçus pour connecter, lors du fonctionnement en mode économique, la sortie de la première unité de régulation de tension à l'entrée de la seconde unité de régulation de courant pour, dans le fonctionnement en mode économique, réguler la qualité du courant sur ladite entrée.

De préférence, l'ensemble d'unités utilisé lors du fonctionnement en mode normal comporte une première unité de régulation de courant du premier convertisseur équipée d'une entrée de courant de référence, la première unité de régulation de courant étant arrêtée lors du fonctionnement en mode économique.

De préférence, l'ensemble d'unités utilisé lors du fonctionnement en mode normal comporte une seconde unité de régulation de tension équipée d'une sortie pour fournir un second courant de référence, lors du fonctionnement en mode normal la sortie de la première unité de régulation de tension étant connectée à l'entrée de courant de référence de la première unité de régulation de courant et la sortie de la seconde unité (44) de régulation de tension étant connectée à l'entrée de courant de référence de la seconde unité de régulation de courant.

De préférence, les moyens de commutation comportent un premier commutateur et un second commutateur pour,
- lors du fonctionnement en mode normal, connecter la sortie de la première unité de régulation de tension à l'entrée de la première unité de régulation de courant à l'aide du premier commutateur, et connecter la sortie de la seconde unité de régulation de tension à l'entrée de la seconde unité de régulation de courant à l'aide du second commutateur, et
- lors du fonctionnement en mode économique, connecter la sortie de la première unité de régulation de tension à un moyen de connexion intermédiaire à l'aide du premier commutateur, et connecter l'entrée de la seconde unité de régulation de courant audit moyen de connexion à l'aide du second commutateur.

Selon un mode de réalisation de l'invention, l'ensemble d'unités utilisé lors du fonctionnement en mode normal comporte au moins un premier générateur de signal alternatif de référence équipé d'une sortie et connecté à des moyens de mesure de la tension alternative sur la première entrée, ledit premier générateur permettant la génération d'un signal alternatif de référence, sur ladite sortie, en phase avec la tension alternative sur la première entrée.

Selon un mode de réalisation, l'alimentation sans interruption comporte une seconde entrée destinée à être connectée à une seconde source de tension alternative, les moyens interrupteurs du circuit de dérivation et/ou de sélection permettant, lors du fonctionnement en mode économique, de coupler directement ladite seconde entrée à la sortie d'alimentation.

De préférence, l'ensemble d'unités utilisé lors du fonctionnement en mode normal comporte un second générateur de signal alternatif de référence équipé d'une sortie et connecté à des moyens de mesure de la tension alternative sur la seconde entrée, ledit second générateur permettant la génération d'un signal alternatif de référence, sur ladite sortie, en phase avec la tension alternative sur la seconde entrée.

De préférence, les moyens de commutation comportent un troisième commutateur permettant,
- lors du fonctionnement en mode normal, de connecter une entrée de synchronisation de la première unité de régulation de tension à la sortie du premier générateur, et
- lors du fonctionnement en mode économique, de connecter ladite entrée de synchronisation de la première unité de régulation de tension à la sortie du second générateur.

Selon un mode de réalisation de l'invention, les unités utilisées lors du fonctionnement en mode normal sont des circuits électroniques, et les commutateurs sont des multiplexeurs ou des commutateurs analogiques pilotés par une unité de traitement.

Selon un autre mode de réalisation de l'invention, les unités utilisées lors du fonctionnement en mode normal et les commutateurs sont des moyens logiciels d'une unité de traitement.

Avantageusement, l'alimentation sans interruption selon l'invention comporte des moyens de stockage d'énergie électrique disposés entre le premier et le second convertisseur.

L'invention concerne également un procédé d'alimentation électrique sans interruption comportant :
- l'application d'une première tension alternative sur au moins une première entrée,
- la fourniture d'une alimentation électrique sans interruption sur une sortie d'alimentation,
- une première conversion de la première tension alternative en une tension continue,
- une seconde conversion de la tension continue en une tension d'alimentation alternative, dans un sens ou dans l'autre sens,
- lors d'un fonctionnement en mode économique, le couplage direct d'une entrée à la sortie d'alimentation, et
- la commande de ladite alimentation électrique sans interruption par un ensemble de fonctions de régulation utilisées lors d'un fonctionnement en mode normal lors duquel ledit couplage direct est interrompu.

Le procédé de l'invention est caractérisé en ce que, lors du fonctionnement en mode économique, il comporte l'arrêt de la première conversion, en ce que la commande de l'alimentation électrique sans interruption comporte une première fonction de régulation de tension pour fournir un premier courant de référence et une seconde fonction de régulation de courant du second convertisseur à partir d'un courant de référence, et en ce que lors du fonctionnement en mode économique, des commutations permettent d'appliquer le premier courant de référence à la seconde fonction de régulation de courant, pour réguler la qualité du courant sur l'entrée.

De préférence, l'ensemble de fonctions utilisé lors du fonctionnement en mode normal comporte une première fonction de régulation de courant du premier convertisseur à partir d'un courant de référence, la première fonction de régulation de courant étant arrêtée lors du fonctionnement en mode économique.

De préférence, l'ensemble de fonctions utilisé lors du fonctionnement en mode normal comporte une seconde fonction de régulation de tension pour fournir un second courant de référence, lors du fonctionnement en mode normal le premier courant de référence fourni par la première fonction de régulation de tension étant appliqué à la première fonction de régulation de courant et le second courant de référence fourni par la seconde fonction de régulation de tension étant appliqué à la seconde fonction de régulation de courant.

Avantageusement, les commutations permettent,
- lors du fonctionnement en mode normal, d'appliquer le premier courant de référence à la première fonction de régulation de courant, et d'appliquer le second courant de référence à la seconde fonction de régulation de courant, et
- lors du fonctionnement en mode économique, d'appliquer le premier courant de référence à la seconde fonction de régulation de courant.

Selon un mode de réalisation du procédé de l'invention, l'ensemble de fonctions utilisé lors du fonctionnement en mode normal comporte la génération d'un premier signal alternatif de référence synchronisé avec la première tension alternative pour fournir un signal alternatif de référence en phase avec la première tension alternative.

Selon un mode de réalisation du procédé de l'invention, ledit procédé comporte l'application d'une seconde tension alternative sur une seconde entrée, lors du fonctionnement en mode économique, la seconde entrée étant couplée à la sortie d'alimentation.

De préférence, l'ensemble de fonctions utilisé lors du fonctionnement en mode normal comporte la génération d'un second signal alternatif de référence synchronisé avec la seconde tension alternative pour fournir un signal alternatif de référence en phase avec la seconde tension alternative.

Avantageusement, les commutations permettent,
- lors du fonctionnement en mode normal, la synchronisation du premier courant de référence avec le premier signal alternatif de référence, et
- lors du fonctionnement en mode économique, la synchronisation du premier courant de référence avec le second signal alternatif de référence.

Selon un mode de réalisation du procédé de l'invention, ledit procédé comporte le stockage d'énergie électrique,
- par la première conversion de la première tension alternative en tension continue, lors du fonctionnement en mode normal, et
- par la seconde conversion, dans l'autre sens, de la tension d'alimentation alternative en tension continue lors du fonctionnement en mode économique.

### BREVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.

La figure 1 représente de manière schématique une alimentation sans interruption selon un mode de l'invention et des moyens de commande associés

La figure 2 représente de manière plus détaillée les unités et les fonctions de régulations associées des moyens de commande. La figure 2 représente un fonctionnement en mode normal.

La figure 3 représente un fonctionnement en mode normal économique.

La figure 4 représente la première unité de régulation de courant du premier convertisseur ainsi que la fonction associée.

La figure 5 représente la seconde unité de régulation de courant du second convertisseur ainsi que la fonction associée.

La figure 6 représente une unité de traitement du courant dans la charge utilisée dans un mode de réalisation particulier.

La figure 7 représente la première unité de régulation de tension du second convertisseur ainsi que la fonction associée.

La figure 8 représente la seconde unité de régulation de tension du second convertisseur ainsi que la fonction associée.

La figure 9 est un organigramme représentatif du procédé d'alimentation sans interruption selon un mode de réalisation.

### DESCRIPTION DETAILLEE D'UN MODE DE REALISATION

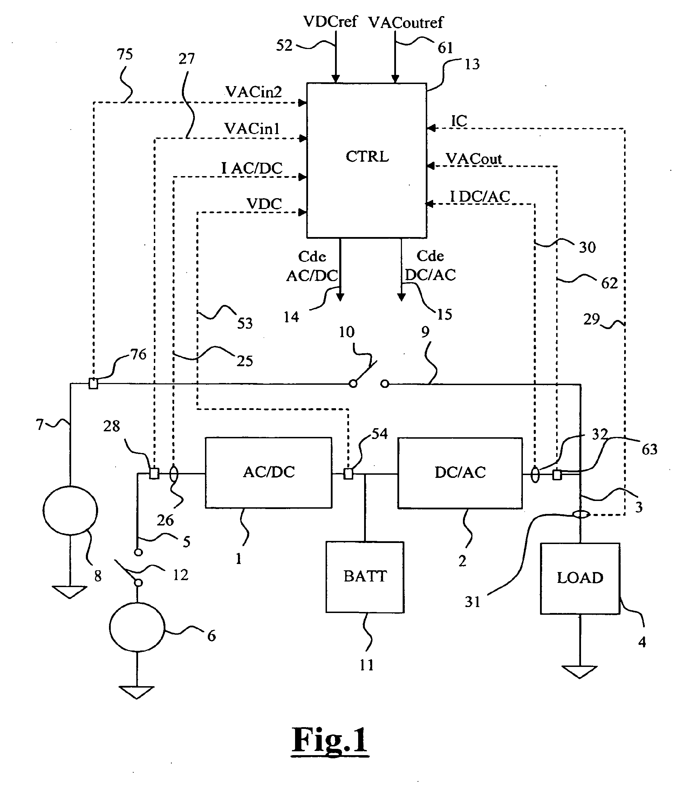

L'alimentation sans interruption représentée à la figure 1 correspond à un mode de réalisation préféré de l'invention du type double conversion, c'est à dire comportant un premier convertisseur 1 d'une tension alternative VACin1 en une tension continue VDC, et un second convertisseur 2 réversible de la tension continue VDC en une tension alternative VACout sur une sortie d'alimentation 3 destinée à être connectée à une charge électrique 4. Les alimentations sans interruption du type double conversion conviennent, en particulier, à la production d'énergie électrique de moyenne et forte puissance.

De préférence, le premier convertisseur est du type « PFC », c'est à dire permettant une correction du facteur de puissance sur une première entrée 5 pour faire tendre ce facteur de puissance vers l'unité.

Dans le mode représenté à la figure 1, l'alimentation sans interruption comporte deux entrées, la première entrée 5 étant destinée à être connectée à une première source 6, également appelée réseau normal ou bien en anglais « normal AC ». La deuxième entrée 7 est, quant à elle, destinée à être connectée à une deuxième source 8, également appelée réseau de secours ou bien en anglais « bypass AC ». L'alimentation sans interruption comporte également un circuit de dérivation et/ou de sélection 9 équipé de moyens interrupteurs 10 pour, lors d'un fonctionnement en mode économique, coupler directement une entrée, en l'occurrence la deuxième entrée 7, à la sortie d'alimentation 3. L'alimentation sans interruption représentée à la figure 1 comporte également des moyens de stockage d'énergie électrique, par exemple une batterie 11 disposée entre le premier et le second convertisseur. L'alimentation sans interruption représentée à la figure 1 permet un fonctionnement dans deux modes distincts : le mode normal et le mode économique.

Lors du fonctionnement en mode normal, la charge 4 est alimentée par la chaîne de conversion comportant le premier convertisseur 1 et le second convertisseur 2. Lors du fonctionnement en mode normal, les convertisseurs peuvent être dans un état couplé ou en anglais « on line », c'est à dire que le premier convertisseur 1 permet de convertir la tension alternative de la première entrée 5 en une tension continue VDC, et le second convertisseur 2 permet de convertir la tension continue VDC en une tension alternative VACout sur la sortie d'alimentation 3. Lors du fonctionnement en mode normal, les convertisseurs peuvent également être dans un état d'autonomie dans le cas où la source connectée sur la première entrée ne fournit plus d'énergie ou fournit une énergie en dehors de certaines tolérances. Dans ce cas, seul le second convertisseur est utilisé pour convertir une tension continue, la production de cette dernière étant assurée par une batterie 11 ou par un module de conversion DC/DC comportant ladite batterie 11.

Lors du fonctionnement en mode économique, les moyens interrupteurs 10 sont fermés et la charge est alimentée via le circuit de dérivation et/ou de sélection 9. Dans l'alimentation sans interruption représentée à la figure 1, il existe deux entrées connectées à deux sources distinctes : une première source souvent qualifiée de réseau normal et une seconde source souvent qualifiée de réseau de secours. Dans le mode de réalisation représenté à la figure 1, le passage en mode économique correspond à la sélection de la seconde source et au couplage de cette seconde source avec la sortie d'alimentation. Parallèlement, la première source est découplée de la première entrée par des moyens interrupteurs 12. Dans un autre mode de réalisation non représenté, dans lequel l'alimentation sans interruption comporte une seule entrée destinée à être connectée à une seule source, le passage en mode économique correspond à une dérivation de cette entrée unique sur la sortie d'alimentation.

L'alimentation sans interruption représentée à la figure 1 comprend des moyens de commande 13 destinés à commander le premier convertisseur 1 et le second convertisseur 2 par l'intermédiaire respectivement de sorties de commande 14 et 15. La commande de ces convertisseurs peut être réalisée par une régulation de courant en utilisant, par exemple, des techniques de modulation de largeur d'impulsions, également qualifiées en anglais de «pulse-width modulation », ou en abrégé « PWM ».

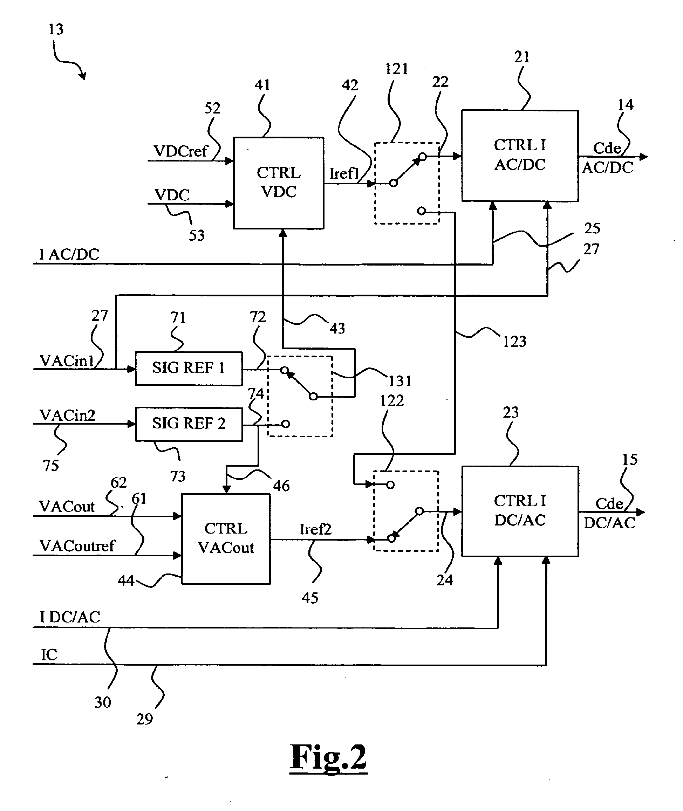

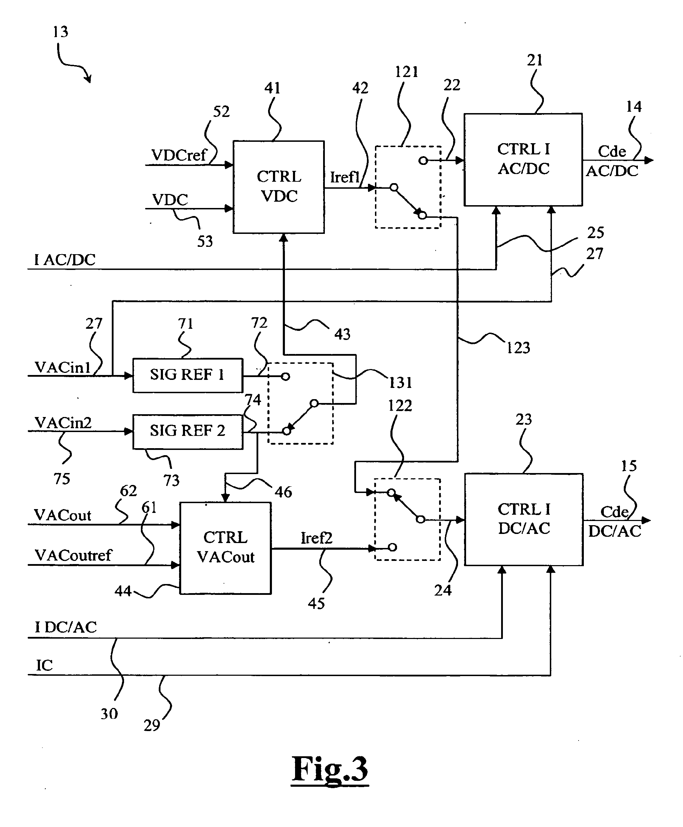

Les moyens de commande sont représentés de manière plus précise aux figures 2 et 3. La figure 2 correspond à un fonctionnement en mode normal, alors que la figure 3 correspond à un fonctionnement en mode économique. Les moyens de commande 13 comportent un ensemble d'unités utilisées lors d'un fonctionnement en mode normal lors duquel l'entrée est découplée de la sortie d'alimentation par l'ouverture des moyens interrupteurs 10 du circuit de dérivation et/ou de sélection 9.

Selon un premier aspect, les moyens de commande 13 sont réalisés de façon à réguler, lors du fonctionnement en mode économique, la qualité du courant sur l'entrée 7, tout en maintenant le premier convertisseur arrêté. Par réguler la qualité du courant sur l'entrée 7, on entend généralement minimiser les harmoniques et/ou la partie réactive de ce courant.

Selon un second aspect, les moyens de commande 13 comportent des moyens de commutation entre les unités, ou au moins une partie desdites unités, qui sont utilisées lors d'un fonctionnement en mode normal. Grâce à ces moyens de commutation, un fonctionnement en mode économique peut être envisagé en utilisant seulement au moins une partie des unités prévues pour le fonctionnement en mode normal, c'est à dire sans ajouter d'unités supplémentaires qui seraient dédiées pour le fonctionnement en mode économique.

Comme cela est représenté aux figures 2 et 3, les moyens de commandes 13 comportent des unités associées à des fonctions de régulation, ainsi que des moyens de commutation entre une partie de l'ensemble d'unités utilisé lors du fonctionnement en mode normal.

Comme cela est représenté aux figures 2 et 3, l'ensemble d'unités utilisé lors du fonctionnement en mode normal comprend une première unité 21 de régulation de courant du premier convertisseur 1 équipée d'une entrée de courant de référence 22 et comportant la sortie de commande 14. De la même façon, une seconde unité 23 de régulation de courant du second convertisseur est équipée d'une entrée de courant de référence 24 et comporte la sortie de commande 15. La première et la deuxième unité de régulation de courant permettent la commande respectivement du premier et du second convertisseur.

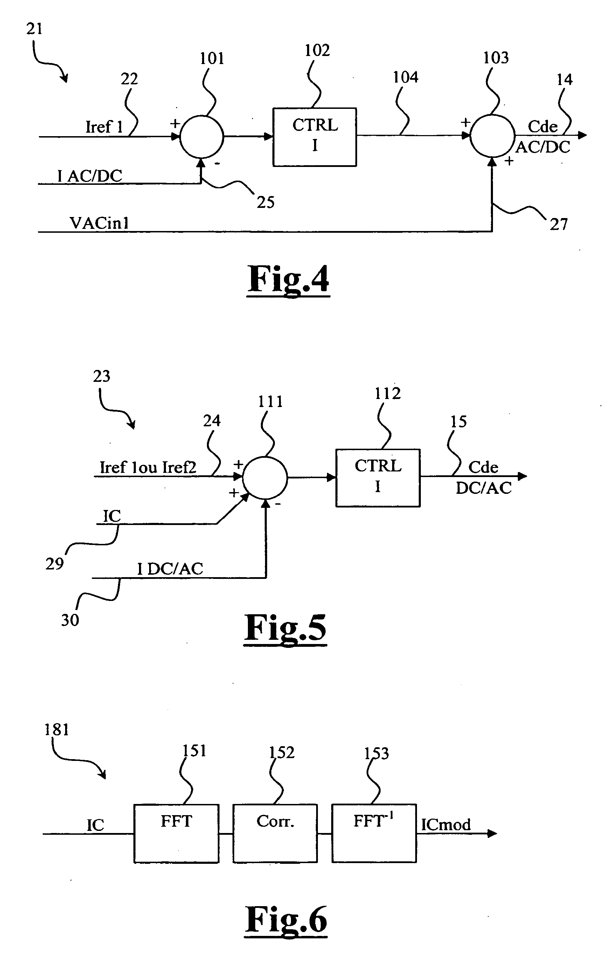

La première unité de régulation de courant 21 est représentée de manière plus détaillée à la figure 4. Elle comporte un comparateur 101 entre un courant de référence Iref1 sur l'entrée 22 et la valeur du courant I AC/DC à l'entrée du premier convertisseur, cette valeur étant disponible sur une ligne 25. Par comparateur, on entend un module dont la fonction est de comparer des valeurs, en l'occurrence des intensités de courant, pour restituer une valeur correspondant à l'écart ou à la différence entre ces deux valeurs. Un comparateur peut être également appelé un soustracteur. Comme cela est représenté à la figure 1, la ligne 25 est connectée à des moyens de mesure 26 du courant I AC/DC à l'entrée du premier convertisseur. La sortie du comparateur est connectée à un régulateur de courant 102 permettant de minimiser la valeur de sortie du comparateur 101, c'est à dire la différence entre le courant de référence Iref1 et la valeur du courant I AC/DC, en déterminant une valeur de consigne sur une sortie 104. Le régulateur de courant 102 peut avantageusement être un régulateur à temps de réponse minimal ou un régulateur du type « PID », c'est à dire comportant des fonctions proportionnelle, intégrale et dérivé. Un sommateur ou additionneur 103 permet d'additionner la valeur obtenue sur une sortie 104 du régulateur de courant 102 avec la valeur de la tension alternative VACin1 sur la première entrée 5, cette dernière valeur étant disponible sur une ligne 27. Cette opération permet ainsi d'optimiser le fonctionnement du régulateur de courant 102 en réalisant une compensation de perturbation. Comme cela est représenté à la figure 1, la ligne 27 est connectée à des moyens de mesure 28 de la tension alternative VACin1 sur la première entrée 5. La sortie du comparateur 103 est, quant à elle, connectée à la sortie de commande 14.

La seconde unité de régulation de courant 23 est représentée de manière plus détaillée à la figure 5. Elle comporte un comparateur/sommateur 111 permettant d'une part, d'effectuer la somme d'un courant de référence, Iref1 ou Iref2, sur l'entrée 24 et d'un courant dans la charge IC dont la valeur est disponible sur une ligne 29, et d'autre part, de déterminer la différence entre le résultat de cette somme et la valeur d'un courant I DC/AC en sortie du second convertisseur disponible sur une ligne 30. Comme cela est représenté à la figure 1, les lignes 29 et 30 sont connectées à des moyens de mesure 31 et 32 respectivement du courant IC dans la charge et du courant I DC/AC en sortie du second convertisseur. La sortie du comparateur/sommateur est connectée à un régulateur de courant 112 permettant de minimiser la valeur de sortie du comparateur/sommateur 111 en générant un signal de commande sur une sortie de commande 15. Le régulateur de courant 112 peut avantageusement être un régulateur à temps de réponse minimal ou un régulateur du type « PID », c'est à dire comportant des fonctions proportionnelle, intégrale et dérivé.

Selon un mode de réalisation particulier, les moyens de commande 13 peuvent comporter, en outre, une unité de traitement 181 du courant IC dans la charge 4. Cette unité peut être installée en amont de la seconde unité de régulation de courant 23, c'est à dire sur la ligne 29. Comme cela est représenté à la figure 6, l'unité de traitement 181 du courant IC comporte un module de transformée de Fourier rapide 151 permettant d'obtenir une transformée de Fourier du courant dans la charge, un module de correction 152 et un module de transformée de Fourier inverse 153. En mode économique, le courant de charge modifiée ICmod est envoyé vers la seconde unité de régulation de courant 23. En mode normal, des moyens de by-pass non représenté permettent d'envoyer directement la valeur du courant de charge non modifié vers la seconde unité de régulation de courant 23. L'unité de traitement 181 du courant IC permet ainsi de minimiser le temps de réaction de la seconde unité de régulation de courant 23.

Comme cela est décrit précédemment, les moyens de commande 13 sont réalisés de façon à réguler, lors du fonctionnement en mode économique, la qualité du courant sur l'entrée 7 tout en maintenant le premier convertisseur arrêté. Ainsi, lors du fonctionnement en mode économique, la première unité de régulation de courant est arrêtée.

Comme cela est représenté aux figures 2 et 3, l'ensemble d'unités utilisé lors du fonctionnement en mode normal comprend, en outre, une première unité 41 de régulation de tension permettant de réguler la tension continue VDC entre les deux convertisseurs. Cette première unité de régulation de tension est équipée d'une sortie 42 pour fournir un premier courant de référence Iref1 et d'une entrée de synchronisation 43. De la même façon, une seconde unité 44 de régulation de tension permet de réguler la tension alternative VACout sur la sortie 3. Cette seconde unité de régulation de tension est équipée d'une sortie 45 pour fournir un second courant de référence Iref2 et d'une entrée de synchronisation 46.

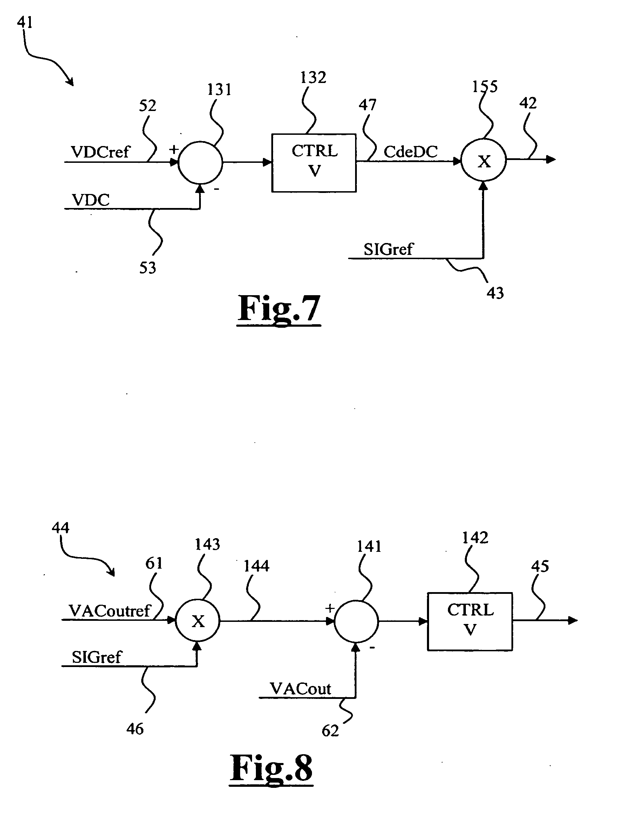

La première unité de régulation de tension 41 est représentée de manière plus détaillée à la figure 7. Elle comporte un multiplieur 155 permettant de générer le premier courant de référence Iref1 à partir d'un signal de commande CdeDC disponible sur une ligne 47, et d'un signal de référence SIGref disponible sur l'entrée de synchronisation 43. La première unité 41 de régulation de tension permet de convertir le signal de commande CdeDC, qui est de type continu en un courant de référence Iref1 de type alternatif. Le signal de commande CdeDC disponible sur la ligne 47 est déterminé par un régulateur de tension 132 ayant pour fonction de minimiser l'écart entre la tension continue VDC entre les deux convertisseur et la valeur d'une consigne VDCref de ladite tension continue. Le régulateur de tension 132 peut avantageusement être un régulateur à temps de réponse minimal ou un régulateur du type « PID », c'est à dire comportant des fonctions proportionnelle, intégrale et dérivé. L'écart entre la tension continue VDC et la valeur d'une consigne VDCref de ladite tension continue est déterminé par un comparateur 131. Par comparateur, on entend un module dont la fonction est de comparer des valeurs, en l'occurrence des tensions, pour restituer une valeur correspondant à l'écart ou à la différence entre ces deux valeurs. La valeur de la tension continue VDC est disponible sur la ligne 53 et la valeur de la consigne VDCref de ladite tension est disponible sur la ligne 52. Comme cela est représenté à la figure 1, la ligne 53 est connectée à des moyens de mesure 54 de la tension continue VDC entre les deux convertisseurs.

La seconde unité de régulation de tension 44 est représentée de manière plus détaillée à la figure 8. Elle comporte un multiplieur 143 permettant de multiplier une valeur de consigne de la tension alternative VACout sur la sortie 3 par un signal de référence SIGref disponible sur l'entrée de synchronisation 46. La valeur de consigne de la tension alternative VACout est généralement représentative d'une tension efficace et est disponible sur une ligne 61. Lors d'un fonctionnement en mode normal, une consigne de tension est ainsi fournie sur la sortie 144 de ce multiplieur 143. La seconde unité 44 de régulation de tension comporte, en outre, un comparateur 141 entre d'une part, la valeur de la consigne de tension sur la ligne 144, et d'autre part, la valeur de la tension alternative VACout sur la sortie d'alimentation, cette valeur étant disponible sur une ligne 62. Par comparateur, on entend un module dont la fonction est de comparer des valeurs, en l'occurrence des tensions, pour restituer une valeur correspondant à l'écart ou à la différence entre ces deux valeurs. Comme cela est représenté à la figure 1, la ligne 62 est connectée à des moyens de mesure 63 de la tension alternative VACout sur la sortie d'alimentation. La sortie du comparateur 141 est connectée à un régulateur de tension 142 dont la sortie 45 est destinée à fournir le second courant de référence Iref2. En mode normal, le régulateur 142 a pour fonction de générer le second courant de référence Iref2 pour obtenir une tension alternative VACout sur la sortie 3 tendant vers la consigne de tension fournie sur la sortie 144 du multiplieur 143, et ceci indépendamment des variations de puissance de la charge 4 connectée sur la sortie 3.

Comme cela est représenté aux figures 2 et 3, l'ensemble d'unités utilisé lors du fonctionnement en mode normal comporte, en outre, un premier générateur 71 de signal alternatif de référence équipé d'une sortie 72 et connecté, via la ligne 27, aux moyens de mesure 28 de la tension alternative sur la première entrée VACin1. Ce premier générateur permet de générer un signal alternatif de référence SIGrefl, sur ladite sortie 72, en phase avec la tension alternative sur la première entrée VACin1. Comme cela a été décrit précédemment, ce signal alternatif de référence SIGrefl est utilisé, lors du mode normal, pour générer le premier courant de référence Iref1 à l'aide de la première unité 41 de régulation de tension.

Comme cela est représenté aux figures 2 et 3, l'ensemble d'unités utilisé lors du fonctionnement en mode normal comporte, en outre, un second générateur 73 de signal alternatif de référence équipé d'une sortie 74 et connecté, via une ligne 75, à des moyens de mesure 76 de la tension alternative sur la seconde entrée VACin2. Ce second générateur permet de générer un signal alternatif de référence SIGref2, sur ladite sortie 74, en phase avec la tension alternative sur la seconde entrée VACin2. Ce signal alternatif de référence SIGref2 est utilisé, lors du mode normal, pour générer le second courant de référence Iref2 à l'aide de la seconde unité 44 de régulation de tension.

Comme cela est décrit précédemment, les moyens de commande 13 comportent des moyens de commutation entre au moins une partie de l'ensemble d'unités utilisé lors d'un fonctionnement en mode normal.

Comme cela est représenté à la figures 2, les moyens de commutation comportent un premier commutateur 121 et un second commutateur 122 pour, lors du fonctionnement en mode normal, connecter la sortie 42 de la première unité de régulation de tension 41 à l'entrée 22 de la première unité de régulation de courant 21, à l'aide du premier commutateur 121, et connecter la sortie 45 de la seconde unité de régulation de tension 44 à l'entrée 24 de la seconde unité de régulation de courant 23 à l'aide du second commutateur 122. En d'autres termes, lors du fonctionnement en mode normal, la première unité de régulation de tension 41 fournit un premier courant de référence Iref1 à l'entrée de courant de référence 22 de la première unité de régulation de courant 21, et la seconde unité de régulation de tension 44 fournit un second courant de référence Iref2 à l'entrée de courant de référence 24 de la seconde unité de régulation de courant 23.

Ainsi, dans un fonctionnement en mode normal, la régulation de chaque convertisseur comporte une boucle interne de régulation de courant via les première et seconde unités de régulation de courant 21 et 23 respectivement dédiées au premier et au second convertisseurs. La régulation de chaque convertisseur comporte, en outre, une boucle externe de régulation de tension via les première et seconde unités de régulation de tension 41 et 44 respectivement dédiées au premier et au second convertisseurs.

Comme cela est représenté à la figure 3, le premier commutateur 121 et le second commutateur 122 des moyens de commutation permettent, lors du fonctionnement en mode économique, de connecter la sortie 42 de la première unité de régulation de tension 41 à un moyen de connexion intermédiaire 123 à l'aide du premier commutateur 121, et de connecter l'entrée 24 de la seconde unité de régulation de courant 23 audit moyen de connexion intermédiaire 123 à l'aide du second commutateur 122. En d'autres termes, lors du fonctionnement en mode économique, la sortie 42 de la première unité de régulation de tension 41 est connectée à l'entrée 24 de la seconde unité de régulation de courant 23. Le moyen de connexion intermédiaire 123 peut être un élément conducteur de l'électricité, tel que représenté sur les figures 2 et 3. Il peut être également tout moyen logiciel permettant de réaliser une telle fonction de connexion.

Dans le fonctionnement en mode économique représenté à la figure 3, l'entrée de courant de référence 22 de la première unité 21 de régulation de courant est déconnectée. La première unité 21 de régulation de courant n'est donc pas utilisée et le premier convertisseur 1 est arrêté.

Ainsi, dans un fonctionnement en mode économique, les boucles internes de régulation de courant via les première et seconde unités de régulation de courant 21 et 23 restent inchangées, sauf que la boucle dédiée au premier convertisseur est inopérante à cause de l'arrêt de ce dernier. Dans le fonctionnement en mode économique, le second convertisseur assure ainsi deux fonctions simultanément. La première fonction consiste à recharger de manière automatique les batteries 11 en prélevant sur la deuxième source 8, également appelée réseau de secours, un courant sinusoïdal présentant un facteur de puissance proche de l'unité et un taux de distorsion harmonique faible. La deuxième fonction du second convertisseur est de générer, sur la sortie d'alimentation 3, un courant permettant de compenser, à la fois, le courant harmonique et le courant réactif de la charge. Dans le fonctionnement en mode économique, le second convertisseur 2 permet donc de fournir la partie réactive et harmonique du courant dans la charge. La partie active de ce courant est, quant à elle, fournie par la deuxième source 8. Cette partie active sert également à la fourniture d'énergie nécessaire à l'alimentation du second convertisseur et à des auxiliaires disposés entre les deux convertisseurs, y compris la batterie 11.

Comme cela est représenté aux figures 2 et 3, les moyens de commutation comportent un troisième commutateur 131. Comme cela est représenté à la figure 2, lors du fonctionnement en mode normal, le troisième commutateur permet de connecter l'entrée de synchronisation 43 de la première unité de régulation de tension 41 à la sortie 72 du premier générateur 71. Comme cela est représenté à la figure 3, lors du fonctionnement en mode économique, le troisième commutateur permet de connecter l'entrée de synchronisation 43 de la première unité de régulation de tension 41 à la sortie 74 du second générateur 73.

Ainsi, dans le fonctionnement en mode économique, le courant sur l'entrée 7 de l'alimentation sans interruption fourni par la source 8 comporte peu d'harmoniques et sa partie réactive est minimisée. En même temps, le rendement énergétique global est amélioré par le fait que le premier convertisseur est arrêté et que l'énergie nécessaire à l'alimentation sans interruption est fournie par la seconde source.

De surcroît, la mise en oeuvre de l'invention ne requiert pas d'unité de commande ou de régulation dédiée au fonctionnement en mode économique. Seule au moins une partie des unités dédiées au fonctionnement en mode normal est utilisée lors du mode économique, à l'aide des moyens de commutation. Ceci permet une grande facilité de mise en oeuvre des alimentations sans interruption, en particulier celles du type à double conversion.

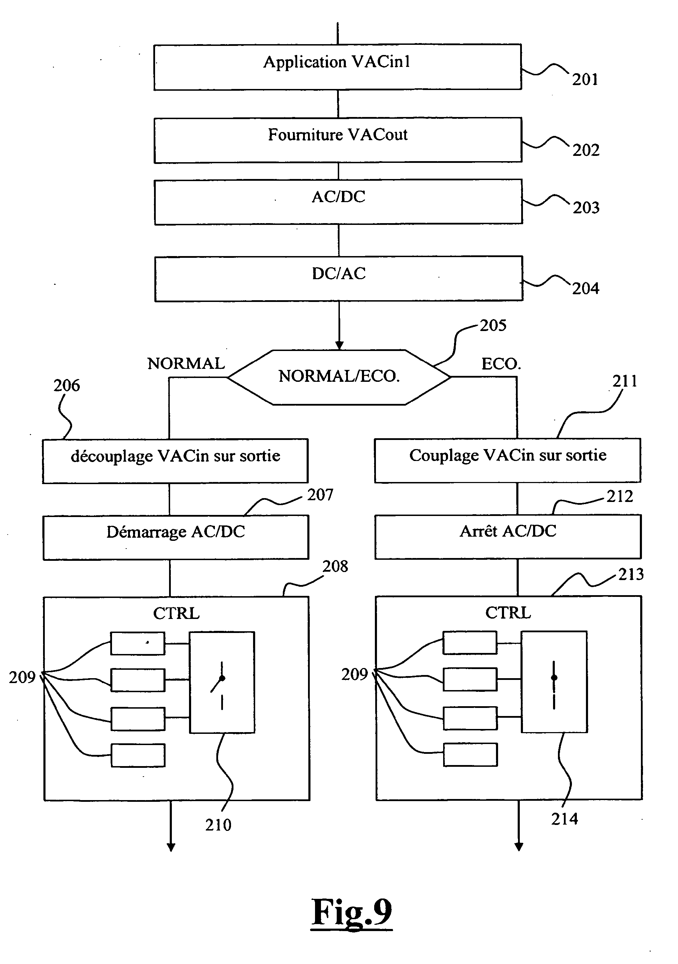

Comme cela est montré dans l'organigramme de la figure 9, le procédé de l'invention comprend :
- l'application 201 d'une première tension alternative VACin1 sur au moins une première entrée 5,
- la fourniture 202 d'une alimentation électrique sans interruption sur une sortie d'alimentation 3,
- une première conversion AC/DC, 203, de la première tension alternative en une tension continue VDC,
- une seconde conversion DC/AC, 204, de la tension continue en une tension d'alimentation alternative VACout, dans un sens ou dans l'autre sens, et
- une étape de test 205 du mode de fonctionnement pour déterminer si l'alimentation sans interruption doit être opérée en mode normal ou en mode économique.

Lors du fonctionnement en mode normal NORMAL, le procédé comporte :
- une étape 206 d'interruption d'un couplage direct d'une entrée à la sortie d'alimentation ou de maintien à l'état découplé,
- une étape 207 de démarrage ou de maintien de la première conversion AC/DC, et
- une étape 208 de commande par un ensemble de fonctions de régulation 209, lesdites fonctions interagissant entre elles selon un premier état de commutation 210.

Lors du fonctionnement en mode économique ECO, le procédé comporte :
- une étape 211 de couplage direct de l'entrée à la sortie d'alimentation ou de maintien à l'état couplé,
- une étape 212 d'arrêt ou de maintien à l'état arrêté de la première conversion AC/DC, et
- une étape 213 de commande comportant au moins une partie de l'ensemble des fonctions de régulation 209, lesdites fonctions interagissant entre elles selon un selon un second état de commutation 214 afin de réguler la qualité du courant sur l'entrée 7 de l'alimentation sans interruption.

## Revendications

1. Alimentation sans interruption comportant :
- au moins une première entrée (5) destinée à être connectée à une première source (6) d'une tension alternative (VACin1),
- une sortie d'alimentation (3) destinée à être connectée à une charge électrique (4),
- un premier convertisseur (1) de la tension alternative sur la première entrée en une tension continue (VDC),
- un second convertisseur réversible (2) de la tension continue en une tension alternative sur la sortie d'alimentation (VACout),
- un circuit de dérivation et/ou de sélection (9) équipé de moyens interrupteurs (10) pour, lors d'un fonctionnement en mode économique, coupler directement une entrée (7) à la sortie d'alimentation (3), et
- des moyens de commande (13) comportant un ensemble d'unités (21, 23, 41, 44, 71, 73) utilisées lors d'un fonctionnement en mode normal lors duquel l'entrée (7) est découplée de la sortie d'alimentation (3) par l'ouverture des moyens interrupteurs (10) du circuit de dérivation et/ou de sélection (9),
où lors du fonctionnement en mode économique, le premier convertisseur (1) est arrêté **caractérisé en ce que** l'ensemble d'unités comporte une première unité (41) de régulation de tension équipée d'une sortie (42) pour fournir un premier courant de référence (Iref1) et une seconde unité (23) de régulation de courant du second convertisseur (2) équipée d'une entrée de courant de référence (24), et **en ce que** les moyens de commande (13) comportent des moyens de commutation (121, 122, 131) conçus pour connecter, lors du fonctionnement en mode économique, la sortie de la première unité de régulation de tension à l'entrée de la seconde unité de régulation de courant pour, dans le fonctionnement en mode économique, réguler la qualité du courant sur ladite entrée (7).

2. Alimentation sans interruption selon la revendication 1, **caractérisée en ce que** l'ensemble d'unités utilisé lors du fonctionnement en mode normal comporte une première unité (21) de régulation de courant du premier convertisseur (1) équipée d'une entrée de courant de référence (22), la première unité de régulation de courant étant arrêtée lors du fonctionnement en mode économique.

3. Alimentation sans interruption selon la revendication 2, **caractérisée en ce que** l'ensemble d'unités utilisé lors du fonctionnement en mode normal comporte une seconde unité (44) de régulation de tension équipée d'une sortie (45) pour fournir un second courant de référence (Iref2), lors du fonctionnement en mode normal la sortie (42) de la première unité (41) de régulation de tension étant connectée à l'entrée de courant de référence de la première unité de régulation de courant et la sortie (45) de la seconde unité (44) de régulation de tension étant connectée à l'entrée de courant de référence de la seconde unité de régulation de courant.

4. Alimentation sans interruption selon la revendication 3, **caractérisée en ce que** les moyens de commutation comportent un premier commutateur (121) et un second commutateur (122) pour,
- lors du fonctionnement en mode normal, connecter la sortie (42) de la première unité de régulation de tension à l'entrée (22) de la première unité de régulation de courant à l'aide du premier commutateur (121), et connecter la sortie (45) de la seconde unité de régulation de tension à l'entrée (24) de la seconde unité de régulation de courant à l'aide du second commutateur (122), et
- lors du fonctionnement en mode économique, connecter la sortie (42) de la première unité de régulation de tension à un moyen de connexion intermédiaire (123) à l'aide du premier commutateur (121), et connecter l'entrée (24) de la seconde unité de régulation de courant audit moyen de connexion à l'aide du second commutateur (122).

5. Alimentation sans interruption selon l'une des revendications 1 à 4, **caractérisée en ce que** l'ensemble d'unités utilisé lors du fonctionnement en mode normal comporte au moins un premier générateur (71) de signal alternatif de référence équipé d'une sortie (72) et connecté à des moyens de mesure (28) de la tension alternative (VACin1) sur la première entrée (5), ledit premier générateur permettant la génération d'un signal alternatif de référence, sur ladite sortie, en phase avec la tension alternative sur la première entrée.

6. Alimentation sans interruption selon l'une des revendications 1 à 5, **caractérisée en ce qu'**elle comporte une seconde entrée (7) destinée à être connectée à une seconde source (8) de tension alternative (VACin2), les moyens interrupteurs (10) du circuit de dérivation et/ou de sélection (9) permettant, lors du fonctionnement en mode économique, de coupler directement ladite seconde entrée à la sortie d'alimentation (3).

7. Alimentation sans interruption selon la revendication 6, **caractérisée en ce que** l'ensemble d'unités utilisé lors du fonctionnement en mode normal comporte un second générateur (73) de signal alternatif de référence équipé d'une sortie (74) et connecté à des moyens de mesure (76) de la tension alternative (VACin2) sur la seconde entrée, ledit second générateur permettant la génération d'un signal alternatif de référence, sur ladite sortie, en phase avec la tension alternative sur la seconde entrée.

8. Alimentation sans interruption selon la revendication 7, **caractérisée en ce que** les moyens de commutation comportent un troisième commutateur (131) permettant,
- lors du fonctionnement en mode normal, de connecter une entrée de synchronisation (43) de la première unité (41) de régulation de tension à la sortie (72) du premier générateur (71), et
- lors du fonctionnement en mode économique, de connecter ladite entrée de synchronisation de la première unité de régulation de tension à la sortie (74) du second générateur (73).

9. Alimentation sans interruption selon l'une des revendications 4 à 8, **caractérisée en ce que** les unités utilisées lors du fonctionnement en mode normal sont des circuits électroniques, et **en ce que** les commutateurs sont des multiplexeurs ou des commutateurs analogiques pilotés par une unité de traitement.

10. Alimentation sans interruption selon l'une des revendications 4 à 8, **caractérisée en ce que** les unités utilisées lors du fonctionnement en mode normal et les commutateurs sont des moyens logiciels d'une unité de traitement.

11. Alimentation sans interruption selon l'une des revendications 1 à 10, **caractérisée en ce qu'**elle comporte des moyens de stockage (11) d'énergie électrique disposés entre le premier et le second convertisseur.

12. Procédé d'alimentation électrique sans interruption comportant :
- l'application (201) d'une première tension alternative (VACin1) sur au moins une première entrée (5),
- la fourniture (202) d'une alimentation électrique sans interruption sur une sortie d'alimentation (3),
- une première conversion (AC/DC, 203) de la première tension alternative en une tension continue (VDC),
- une seconde conversion (DC/AC, 204) de la tension continue en une tension d'alimentation alternative (VACout), dans un sens ou dans l'autre sens,
- lors d'un fonctionnement en mode économique, le couplage direct d'une entrée (7) à la sortie d'alimentation, et
- la commande (CTRL, 208) de ladite alimentation électrique sans interruption par un ensemble de fonctions de régulation (209) utilisées lors d'un fonctionnement en mode normal lors duquel ledit couplage direct est interrompu,
où lors du fonctionnement en mode économique, il comporte l'arrêt (212) de la première conversion, **caractérisé en ce que** la commande (213) de l'alimentation électrique sans interruption comporte une première fonction de régulation de tension pour fournir un premier courant de référence et une seconde fonction de régulation de courant du second convertisseur à partir d'un courant de référence, et **en ce que** lors du fonctionnement en mode économique, des commutations (214) permettent d'appliquer le premier courant de référence à la seconde fonction de régulation de courant, pour réguler la qualité du courant sur l'entrée (7).

13. Procédé selon la revendication 12, **caractérisé en ce que** l'ensemble de fonctions utilisé lors du fonctionnement en mode normal comporte une première fonction de régulation de courant du premier convertisseur à partir d'un courant de référence, la première fonction de régulation de courant étant arrêtée lors du fonctionnement en mode économique.

14. Procédé selon la revendication 13, **caractérisé en ce que** l'ensemble de fonctions utilisé lors du fonctionnement en mode normal comporte une seconde fonction de régulation de tension pour fournir un second courant de référence, lors du fonctionnement en mode normal le premier courant de référence fourni par la première fonction de régulation de tension étant appliqué à la première fonction de régulation de courant et le second courant de référence fourni par la seconde fonction de régulation de tension étant appliqué à la seconde fonction de régulation de courant.

15. Procédé selon la revendication 14, **caractérisé en ce que** les commutations permettent,
- lors du fonctionnement en mode normal, d'appliquer le premier courant de référence à la première fonction de régulation de courant, et d'appliquer le second courant de référence à la seconde fonction de régulation de courant, et
- lors du fonctionnement en mode économique, d'appliquer le premier courant de référence à la seconde fonction de régulation de courant.

16. Procédé selon l'une des revendications 12 à 15, **caractérisé en ce que** l'ensemble de fonctions utilisé lors du fonctionnement en mode normal comporte la génération d'un premier signal alternatif de référence synchronisé avec la première tension alternative pour fournir un signal alternatif de référence en phase avec la première tension alternative.

17. Procédé selon l'une des revendications 12 à 16, **caractérisé en ce qu'**il comporte l'application d'une seconde tension alternative sur une seconde entrée, lors du fonctionnement en mode économique, la seconde entrée étant couplée à la sortie d'alimentation.

18. Procédé selon la revendication 17, **caractérisé en ce que** l'ensemble de fonctions utilisé lors du fonctionnement en mode normal comporte la génération d'un second signal alternatif de référence synchronisé avec la seconde tension alternative pour fournir un signal alternatif de référence en phase avec la seconde tension alternative.

19. Procédé selon la revendication 18, **caractérisé en ce que** les commutations permettent,
- lors du fonctionnement en mode normal, la synchronisation du premier courant de référence avec le premier signal alternatif de référence, et
- lors du fonctionnement en mode économique, la synchronisation du premier courant de référence avec le second signal alternatif de référence.

20. Procédé selon l'une des revendications 12 à 19, **caractérisé en ce qu'**il comporte le stockage d'énergie électrique,
- par la première conversion de la première tension alternative en tension continue, lors du fonctionnement en mode normal, et
- par la seconde conversion, dans l'autre sens, de la tension d'alimentation alternative en tension continue lors du fonctionnement en mode économique.

## Claims

1. An uninterruptible power supply comprising:
- at least a first input (5) designed to be connected to a first source (6) of an AC voltage (VACin1),
- a power supply output (3) designed to be connected to an electric load (4),
- a first converter (1) for converting the AC voltage on the first input into a DC voltage (VDC),
- a reversible second converter (2) for converting the DC voltage into an AC voltage on the power supply output (VACout),
- a branching and/or selection circuit (9) equipped with interrupting means (10) to connect an input (7) directly to the power supply output (3) when operating in economic mode, and
- control means (13) comprising a set of units (21, 23, 41, 44, 71, 73) used when operating in normal mode in which the input (7) is disconnected from the power supply output (3) by opening of the interrupting means (10) of the branching and/or selection circuit (9),
**characterized in that**, when operating in economic mode, the first converter (1) is shut down, that the set of units comprises a first voltage regulation unit (41) equipped with an output (42) to supply a first reference current (Iref1) and a second current regulation unit (23) of the second converter (2) equipped with a reference current input (24), and that
the control means (13) comprise switching means (121, 122, 131) designed to connect the output of the first voltage regulation unit to the input of the second current regulation unit to regulate the quality of the current on said input (7) when operating in economic mode.

2. The uninterruptible power supply according to claim 1, **characterized in that** the set of units used when operating in normal mode comprises a first current regulation unit (21) of the first converter (1) equipped with a reference current input (22), the first current regulation unit being shut down when operating in economic mode.

3. The uninterruptible power supply according to claim 2, **characterized in that** the set of units used when operating in normal mode comprises a second voltage regulation unit (44) equipped with an output (45) to supply a second reference current (Iref2), the output (42) of the first voltage regulation unit (41) being connected to the reference current input of the first current regulation unit and the output (45) of the second voltage regulation unit (44) being connected to the reference current input of the second current regulation unit when operating in normal mode.

4. The uninterruptible power supply according to claim 3, **characterized in that** the switching means comprise a first switch (121) and a second switch (122) to
- connect the output (42) of the first voltage regulation unit to the input (22) of the first current regulation unit by means of the first switch (121), and connect the output (45) of the second voltage regulation unit to the input (24) of the second current regulation unit by means of the second switch (122) when operating in normal mode, and
- connect the output (42) of the first voltage regulation unit to an intermediate connection means (123) by means of the first switch (121), and connect the output (24) of the second voltage regulation unit to said connection means by means of the second switch (122) when operating in economic mode.

5. The uninterruptible power supply according to one of claims 1 to 4, **characterized in that** the set of units used when operating in normal mode comprises at least a first reference AC signal generator (71) equipped with an output (72) and connected to means (28) for measuring the AC voltage (VACin1) on the first input (5), said first generator generating a reference AC signal on said output in phase with the AC voltage on the first input.

6. The uninterruptible power supply according to one of claims 1 to 5, **characterized in that** it comprises a second input (7) designed to be connected to a second source (8) of AC voltage (VACin2), the interrupting means (10) of the branching and/or selection circuit (9) enabling said second input to be connected directly to the power supply output (3) when operating in economic mode.

7. The uninterruptible power supply according to claim 6, **characterized in that** the set of units used when operating in normal mode comprises a second reference AC signal generator (73) equipped with an output (74) and connected to means (76) for measuring the AC voltage (VACin2) on the second input, said second generator generating a reference AC signal on said output in phase with the AC voltage on the second input.

8. The uninterruptible power supply according to claim 7, **characterized in that** the switching means comprise a third switch (131) to
- connect a synchronization input (43) of the first voltage regulation unit (41) to the output (72) of the first generator (71) when operating in normal mode, and
- connect said synchronization input of the first voltage regulation unit to the output (74) of the second generator (73) when operating in economic mode.

9. The uninterruptible power supply according to one of claims 4 to 8, **characterized in that** the units used when operating in normal mode are electronic circuits and that the switches are multiplexers or analog switches controlled by a processing unit.

10. The uninterruptible power supply according to one of claims 4 to 8, **characterized in that** the units used when operating in normal mode and the switches are software means of a processing unit.

11. The uninterruptible power supply according to one of claims 1 to 10, **characterized in that** it comprises electric power storage means (11) arranged between the first and second converter.

12. A method for providing an uninterruptible electric power supply comprising:
- application (201) of a first AC voltage (VACin1) on at least a first input (5),
- supply (202) of an uninterruptible electric power supply on a power supply output (3),
- a first conversion (AC/DC, 203) of the first AC voltage into a DC voltage (VDC),
- a second conversion (DC/AC, 204) of the DC voltage into an AC supply voltage (VACout), in either direction,
- when operating in economic mode, direct connection of an input (7) to the power supply output, and
- control (CTRL, 208) of said uninterruptible electric power supply by a set of regulation functions (209) used when operating in normal mode in which said direct connection is interrupted.
**characterized in that**, when operating in economic mode, it comprises stopping (212) of the first conversion, that control (213) of the uninterruptible electric power supply comprises a first voltage regulation function to supply a first reference current and a second current regulation function of the second converter from a reference current, and that, when operating in economic mode, switchings (214) enable the first reference current to be applied to the second current regulation function to regulate the quality of the current on the input (7).

13. The method according to claim 12, **characterized in that** the set of functions used when operating in normal mode comprises a first current regulation function of the first converter from a reference current, the first current regulation function being stopped when operating in economic mode.

14. The method according to claim 13, **characterized in that** the set of functions used when operating in normal mode comprises a second voltage regulation function to supply a second reference current when operating in normal mode, the first reference current supplied by the first voltage regulation function being applied to the first current regulation function and the second reference current supplied by the second voltage regulation function being applied to the second current regulation function.

15. The method according to claim 14, **characterized in that** the switchings enable,
- the first reference current to be applied to the first current regulation function and the second reference current to be applied to the second current regulation function when operating in normal mode, and
- the first reference current to be applied to the second current regulation function when operating in economic mode.

16. The method according to one of claims 12 to 15, **characterized in that** the set of functions used when operating in normal mode comprises generation of a first reference AC signal synchronized with the first AC voltage to supply a reference AC signal in phase with the first AC voltage.

17. The method according to one of claims 12 to 16, **characterized in that** it comprises application of a second AC voltage on a second input when operating in economic mode, the second input being connected to the power supply output.

18. The method according to claim 17, **characterized in that** the set of functions used when operating in normal mode comprises generation of a second reference AC signal synchronized with the second AC voltage to supply a reference AC signal in phase with the second AC voltage.

19. The method according to claim 18, **characterized in that** the switchings enable,
- the first reference current to be synchronized with the first reference AC signal when operating in normal mode, and
- the first reference current to be synchronized with the second reference AC signal when operating in economic mode.

20. The method according to one of claims 12 to 19, **characterized in that** it comprises storing of electric power,
- by the first conversion of the first AC voltage into DC voltage when operating in normal mode, and
- by the second conversion, in the opposite direction, of the AC supply voltage into DC voltage when operating in economic mode.

## Patentansprüche

1. Unterbrechungsfreie Stromversorgung mit
- mindestens einem ersten Eingang (5) zum Anschluss an eine erste, eine Wechselspannung (VACin1) liefernde Einspeisung (6),
- einem Stromversorgungsausgang (3) zum Anschluss an eine elektrische Last (4),
- einem ersten Umrichter (1) zur Umwandlung der Wechselspannung am ersten Eingang in eine Gleichspannung (VDC),
- einem zweiten bidrektionalen Umrichter (2) zur Umwandlung der Gleichspannung in eine Wechselspannung am Stromversorgungsausgang (VACout),
- einem Umgehungs- bzw. Umschaltkreis (9) mit Schaltermitteln (10) zur direkten Verbindung eines Eingangs (7) mit dem Stromversorgungsausgang (3) bei Betrieb im Energiesparmodus sowie
- mit mehrere Steuereinheiten (21, 23, 41, 44, 71, 73) umfassenden Steuermitteln (13), welche Einheiten in einem Normalbetriebsmodus verwendet werden, in dem der Eingang (7) durch Öffnen der Schaltermittel (10) des Umgehungs- bzw. Umschaltkreises (9) vom Stromversorgungsausgang (3) getrennt ist (9),
wobei im Energiesparmodus der erste Umrichter (1) abgeschaltet ist, **dadurch gekennzeichnet, dass** die Steuereinheiten eine erste Spannungsregeleinheit (41) mit einem Ausgang (42) zur Lieferung eines ersten Referenzstroms (Iref1) sowie eine zweite Stromregeleinheit (23) des zweiten Umrichters (2) mit einem Referenzstromeingang (24) umfassen, und **dadurch**, dass die Steuermittel (13) Umschaltmittel (121, 122, 131) umfassen, die dazu dienen, bei Betrieb im Energiesparmodus den Ausgang der ersten Spannungsregeleinheit mit dem Eingang der zweiten Stromregeleinheit zu verbinden, um bei Betrieb im Energiesparmodus die Güte des Stroms am genannten Eingang (7) zu regeln.

2. Unterbrechungsfreie Stromversorgung nach Anspruch 1, **dadurch gekennzeichnet, dass** die im Normalbetriebsmodus verwendeten Steuereinheiten eine erste Stromregeleinheit (21) des ersten Umrichters (1) mit einem Referenzstromeingang (22) umfasst, wobei die erste Stromregeleinheit (21) bei Betrieb im Energiesparmodus abgeschaltet ist.

3. Unterbrechungsfreie Stromversorgung nach Anspruch 2, **dadurch gekennzeichnet, dass** die im Normalbetriebsmodus verwendeten Steuereinheiten eine zweite Spannungsregeleinheit (44) mit einem Ausgang (45) zur Lieferung eines zweiten Referenzstroms (Iref2) umfassen, wobei im Normalbetriebsmodus der Ausgang (42) der ersten Spannungsregeleinheit (41) mit dem Referenzstromeingang der ersten Stromregeleinheit (45) und der Ausgang (45) der zweiten Stromregeleinheit (44) mit dem Referenzstromeingang der zweiten Stromregeleinheit verbunden ist.

4. Unterbrechungsfreie Stromversorgung nach Anspruch 3, **dadurch gekennzeichnet, dass** die Umschaltmittel einen ersten Umschalter (121) und einen zweiten Umschalter (122) umfassen, um
- im Normalbetriebsmodus den Ausgang (42) der ersten Spannungsregeleinheit (22) mithilfe des ersten Umschalters (121) mit dem Eingang (22) der ersten Stromregeleinheit zu verbinden und den Ausgang (45) der zweiten Spannungsregeleinheit (24) mithilfe des zweiten Umschalters (122) mit dem Eingang (24) der zweiten Stromregeleinheit zu verbinden, sowie
- im Energiesparmodus den Ausgang (42) der ersten Spannungsregeleinheit (22) mithilfe des ersten Umschalters (121) mit einem Zwischenverbindungsglied (123) zu verbinden und den Eingang (24) der zweiten Stromregeleinheit mithilfe des zweiten Umschalters (122) mit dem genannten Verbindungsglied zu verbinden.

5. Unterbrechungsfreie Stromversorgung nach einem der Ansprüche 1 bis 4, **dadurch gekennzeichnet, dass** die im Normalbetriebsmodus verwendeten Steuereinheiten mindestens einen ersten Signalgeber (71) zur Erzeugung eines Referenz-Wechselsignals umfassen, welcher Signalgeber einen Ausgang (72) umfasst und mit Messmitteln (28) zur Messung der Wechselspannung (VACin1) am ersten Eingang verbunden ist, wobei der genannte erste Signalgeber am genannten Ausgang ein Referenz-Wechselsignal bereitstellen kann, das mit der am ersten Eingang anliegenden Wechselspannung phasengleich ist.

6. Unterbrechungsfreie Stromversorgung nach einem der Ansprüche 1 bis 5, **dadurch gekennzeichnet, dass** sie einen zweiten Eingang (7) umfasst, der dazu dient, mit einer zweiten Einspeisung (8) zur Lieferung einer Wechselspannung (VACin2) verbunden zu werden, wobei die Schaltermittel (10) des Umgehungs- bzw. Umschaltkreises (9) im Energiesparmodus eine direkte Verbindung des genannten zweiten Eingangs mit dem Stromversorgungsausgang (3) ermöglichen.

7. Unterbrechungsfreie Stromversorgung nach Anspruch 6, **dadurch gekennzeichnet, dass** die im Normalbetriebsmodus verwendeten Steuereinheiten einen zweiten Signalgeber (73) zur Erzeugung eines Referenz-Wechselsignals umfassen, welcher Signalgeber einen Ausgang (74) umfasst und mit Messmitteln (76) zur Messung der Wechselspannung (VACin2) am zweiten Eingang verbunden ist, wobei der genannte zweite Signalgeber am genannten Ausgang ein Referenz-Wechselsignal bereitstellen kann, das mit der am zweiten Eingang anliegenden Wechselspannung phasengleich ist.

8. Unterbrechungsfreie Stromversorgung nach Anspruch 7, **dadurch gekennzeichnet, dass** die Umschaltmittel einen dritten Umschalter (131) umfassen, der es ermöglicht,
- im Normalbetriebsmodus einen Synchronisiereingang (43) der ersten Spannungsregeleinheit (72) mit dem Ausgang (72) des ersten Signalgebers (71) zu verbinden,
- und im Energiesparmodus den genannten Synchronisiereingang der ersten Spannungsregeleinheit (74) mit dem Ausgang (74) des zweiten Signalgebers (73) zu verbinden.

9. Unterbrechungsfreie Stromversorgung nach einem der Ansprüche 4 bis 8, **dadurch gekennzeichnet, dass** die im Normalbetriebsmodus verwendeten Steuereinheiten als elektronische Schaltungen ausgelegt sind und dass die Umschalter Multiplexer oder analoge Umschalter darstellen, die über eine Verarbeitungseinheit gesteuert werden.

10. Unterbrechungsfreie Stromversorgung nach einem der Ansprüche 4 bis 8, **dadurch gekennzeichnet, dass** die im Normalbetriebsmodus verwendeten Steuereinheiten und Umschalter als Softwarefunktionen einer Verarbeitungseinheit ausgebildet sind.

11. Unterbrechungsfreie Stromversorgung nach einem der Ansprüche 1 bis 10, **dadurch gekennzeichnet, dass** sie Speichermittel (11) zur Speicherung elektrischer Energie umfasst, die zwischen den ersten und den zweiten Umrichter geschaltet sind.

12. Verfahren zur unterbrechungsfreien Stromversorgung mit
- Anlegen (201) einer ersten Wechselspannung (VACin1) an mindestens einen ersten Eingang (5),
- Bereitstellung (202) einer unterbrechungsfreien Stromversorgung an einem Stromversorgungsausgang (3),
- einer ersten Umrichtung (AC/DC, 203) der ersten Wechselspannung in eine Gleichspannung (VDC),
- einer zweiten Umrichtung (DC/AC, 204) der Gleichspannung in eine Versorgungs-Wechselspannung (VACout) in der einen oder der anderen Richtung,
- der direkten Verbindung eines Eingangs (7) mit dem Stromversorgungsausgang bei Betrieb im Energiesparmodus und
- Steuerung (CTRL, 208) der genannten unterbrechungsfreien Stromversorgung über mehrere Regelfunktionen (209) im Normalbetriebsmodus, in dem die genannte direkte Verbindung unterbrochen ist,
wobei das Verfahren im Energiesparmodus die Abschaltung (212) der ersten Umrichtstufe umfasst, **dadurch gekennzeichnet, dass** die Steuerung (213) der unterbrechungsfreien Stromversorgung eine erste Spannungsregelfunktion zur Lieferung eines ersten Referenzstroms sowie eine zweite Stromregelfunktion des zweiten Umrichters in Abhängigkeit von einem Referenzstrom umfasst, und **dadurch**, dass bei Betrieb im Energiesparmodus der erste Referenzstrom durch Umschaltvorgänge (214) der zweiten Stromregelfunktion zugeordnet werden kann, um die Güte des Stroms am Eingang (7) zu regeln.

13. Verfahren nach Anspruch 12, **dadurch gekennzeichnet, dass** die im Normalbetriebsmodus verwendeten Steuerfunktionen eine erste Stromregelfunktion des ersten Umrichters in Abhängigkeit von einem Referenzstrom umfassen, wobei die erste Stromregelfunktion bei Betrieb im Energiesparmodus abgeschaltet ist.

14. Verfahren nach Anspruch 13, **dadurch gekennzeichnet, dass** die im Normalbetriebsmodus verwendeten Steuerfunktionen eine zweite Spannungsregelfunktion zur Lieferung eines zweiten Referenzstroms umfassen, wobei im Normalbetriebsmodus der von der ersten Spannungsregelfunktion gelieferte erste Referenzstrom der ersten Stromregelfunktion und der von der zweiten Spannungsregelfunktion gelieferte zweite Referenzstrom der zweiten Stromregelfunktion zugeordnet wird.

15. Verfahren nach Anspruch 14, **dadurch gekennzeichnet, dass** es durch die Umschaltvorgänge möglich ist,
- im Normalbetriebsmodus den ersten Referenzstrom der ersten Stromregelfunktion und den zweiten Referenzstrom der zweiten Stromregelfunktion zuzuordnen, sowie
- bei Betrieb im Energiesparmodus den ersten Referenzstrom der zweiten Stromregelfunktion zuzuordnen.

16. Verfahren nach einem der Ansprüche 12 bis 15, **dadurch gekennzeichnet, dass** die im Normalbetriebsmodus verwendeten Steuerfunktionen die Erzeugung eines mit der ersten Wechselspannung synchronisierten, ersten Referenz-Wechselsignals umfassen, um ein Referenz-Wechselsignal zu liefern, das mit der ersten Wechselspannung phasengleich ist.

17. Verfahren nach einem der Ansprüche 12 bis 16, **dadurch gekennzeichnet, dass** es bei Betrieb im Energiesparmodus das Anlegen einer zweiten Wechselspannung an einen zweiten Eingang umfasst, wobei der zweite Eingang mit dem Stromversorgungsausgang verbunden ist.

18. Verfahren nach Anspruch 17, **dadurch gekennzeichnet, dass** die im Normalbetriebsmodus verwendeten Steuerfunktionen die Erzeugung eines mit der zweiten Wechselspannung synchronisierten, zweiten Referenz-Wechselsignals umfassen, um ein Referenz-Wechselsignal zu liefern, das mit der zweiten Wechselspannung phasengleich ist.

19. Verfahren nach Anspruch 18, **dadurch gekennzeichnet, dass** es durch die Umschaltvorgänge möglich ist,
- im Normalbetriebsmodus den ersten Referenzstrom mit dem ersten Referenz-Wechselsignal zu synchronisieren, sowie
- im Energiesparmodus den ersten Referenzstrom mit dem zweiten Referenz-Wechselsignal zu synchronisieren.

20. Verfahren nach einem der Ansprüche 12 bis 19, **dadurch gekennzeichnet, dass** es die Speicherung elektrischer Energie durch
- die erste Umrichtung der ersten Wechselspannung in eine Gleichspannung im Normalbetriebsmodus sowie
- die in entgegensetzter Richtung erfolgende zweite Umrichtung der Wechselspannung in Gleichspannung im Energiesparmodus erlaubt.
